# DEMANDE DE BREVET EUROPEEN

(11) **EP 3 242 468 A1**
(43) Date de publication de la demande: **08.11.2017**
(21) Numéro de dépôt: 17168511.8
(22) Date de dépôt: 27.04.2017
(51) Int. Cl.: H04N 1/00

(54) **BORNE A IMPRESSION DE CARTE POSTALE**

(30) Priorité: 02.05.2016 FR 1653945
(71) Demandeur: Peek's Print, 78000 Versailles (FR)
(72) Inventeur: MALLIART, Anne, 78000 Versailles (FR); BONNET, Jérôme, 75012 Paris (FR)
(74) Mandataire: Bandpay & Greuter

(57) **Abrégé**

L'invention se rapporte notamment à une borne (10) à impression de carte postale comprenant une coque (12), une imprimante (50) à l'intérieur de la coque, l'imprimante étant munie d'un bac (52) de chargement à feuilles de papier cartonné, et un système de pilotage (90) de l'imprimante, le système de pilotage de l'imprimante étant configuré pour le chargement d'une image envoyée par un appareil électronique de communication mobile via un canal de communication électromagnétique, et pour commander l'impression de l'image par l'imprimante.

L'invention permet ainsi une impression de carte postale facilitée.

## Description

### DOMAINE DE L'INVENTION

L'invention se rapporte au domaine des bornes à impression, et en particulier à une borne à impression de carte postale et à un programme d'ordinateur pour commander une telle borne à impression.

### ARRIERE-PLAN

Il existe différentes bornes à impression de photo, disponible en libre-service et en général à l'intérieur des bâtiments. Ces bornes comprennent une coque pour protéger différents composants de la borne et/ou les rendre au moins partiellement inaccessibles aux utilisateurs. En particulier, ces bornes comprennent à l'intérieur de la coque une imprimante adaptée à l'impression de photos et munie d'un système de chargement de papier à photo. Le système de chargement de papier à photo peut par exemple comprendre un système à rouleau agencé pour le déroulement de papier à photo enroulé et vierge, c'est-à-dire avant impression, et un système de découpe du papier à photo une fois l'impression réalisée ou lancée, afin de délivrer la photo à un utilisateur de la borne. Ces bornes comprennent également un système de pilotage de l'imprimante configuré pour le chargement d'une image fournie par l'utilisateur de la borne, et pour commander l'impression de l'image par l'imprimante. Le chargement de l'image se fait généralement par le biais de fentes prévues dans la borne pour l'insertion d'une carte mémoire ou d'une clé de stockage.

L'utilisation de ces bornes est limitée à l'impression de photos. Le chargement de l'image n'est pas pratique pour l'utilisateur, qui doit insérer un élément dans une fente de la borne. En outre, la fente constitue une zone d'inétanchéité de la coque dont il faut tenir compte pour une éventuelle utilisation de la borne en extérieur, ce qui complique la fabrication de la borne, notamment de sa coque.

Le but de la présente invention est de proposer une borne à impression améliorée par rapport à ces inconvénients.

### RESUME DE L'INVENTION

On propose donc une borne à impression de carte postale comprenant une coque, une imprimante à l'intérieur de la coque, l'imprimante étant munie d'un bac de chargement à feuilles de papier cartonné, et un système de pilotage de l'imprimante, le système de pilotage de l'imprimante étant configuré pour le chargement d'une image envoyée par un appareil électronique de communication mobile via un canal de communication électromagnétique, et pour commander l'impression de l'image par l'imprimante.

Selon différents modes de réalisation, la borne comprend l'une ou plusieurs des caractéristiques suivantes :
- le canal de communication électromagnétique est un canal WiFi ;
- le système de pilotage de l'imprimante comprend un point d'accès WiFi configuré pour établir le canal WiFi ;
- le système de pilotage de l'imprimante est configuré pour diffuser un service Web, le service Web comprenant une fonctionnalité de commande de l'envoi de l'image ;
- le système de pilotage de l'imprimante est configuré pour diffuser le service Web via un protocole de portail captif;
- le service Web comprend une fonctionnalité d'envoi à l'appareil électronique de communication d'un code personnel d'utilisateur, la borne comprenant un système de saisie du code personnel, le système de pilotage de l'imprimante conditionnant la commande de l'impression de l'image à la saisie du code personnel ;
- la borne comprend en outre un écran tactile ;
- la commande de l'impression de l'image par l'imprimante comprend une interaction avec l'utilisateur via l'écran tactile ; et/ou
- la borne comprend en outre un terminal de paiement, un système d'affranchissement, et/ou système de régulation de température à l'intérieur de la coque.

On propose également un programme d'ordinateur comprenant des instructions de code de programme pour l'exécution, lorsque ledit programme est exécuté sur le système de pilotage de l'imprimante d'une telle borne, des étapes du procédé consistant à commander le chargement d'une image depuis un appareil électronique de communication mobile via un canal de communication électromagnétique, et commander l'impression de l'image par l'imprimante.

### BREVE DESCRIPTION DES FIGURES

D'autres caractéristiques et avantages de l'invention apparaîtront à la lecture de la description détaillée qui suit de l'invention, donnée à titre d'exemple et en référence aux dessins annexés, dans lesquels :
Les FIGS. 1 et 2 montrent un exemple de borne à impression de carte postale, respectivement de face et de dos ;
La FIG. 3 montre une vue en coupe de l'exemple de borne à impression de carte postale des FIGS. 1 et 2 ;
La FIG. 4 montre un exemple schématique d'un système de pilotage ; et
La FIG. 5 montre un exemple d'une architecture de fonctionnement de la borne.

### DESCRIPTION DETAILLEE

La borne est à impression de carte postale. La borne comprend une coque et une imprimante à l'intérieur de la coque. L'imprimante est munie d'un bac de chargement à feuilles de papier cartonné. La borne comprend également un système de pilotage de l'imprimante. Le système de pilotage de l'imprimante est configuré pour le chargement d'une image. L'image chargée est une image envoyée par un appareil électronique de communication mobile via un canal de communication électromagnétique. Le système de pilotage de l'imprimante est en outre configuré pour commander l'impression de l'image par l'imprimante. Un tel dispositif constitue une borne à impression améliorée.

La borne est notamment adaptée à l'impression de carte postale, exclusivement ou non exclusivement. L'imprimante est donc munie d'éléments matériels configurés pour l'impression de carte(s) postale(s) en particulier, c'est-à-dire que l'imprimante comprend de tels éléments ou que l'imprimante est reliée à de tels éléments qui sont alors eux aussi, de même que l'imprimante, agencés à l'intérieur de la coque. Ces éléments matériels comprennent le bac de chargement à feuilles de papier cartonné.

Un bac de chargement d'imprimante est de manière connue un dispositif comprenant un réceptacle dans lequel des feuilles de papier physiquement distinctes peuvent être chargées par empilement, et un système pour emmener les feuilles vers la zone d'impression de l'imprimante. Lorsqu'une imprimante est munie d'un bac de chargement, l'impression se fait par distribution des feuilles de papier contenues dans le bac vers la zone d'impression, par exemple une-par-une. Ainsi, la borne peut être utilisée pour imprimer des cartes postales en exerçant de faibles contraintes mécaniques sur le papier cartonné, et notamment en évitant le système des bornes à impression de photo de l'art antérieur consistant de manière périodique à dérouler progressivement et découper un rouleau de papier. Dans des exemples, l'impression peut ainsi se faire sans aucune découpe du papier cartonné. Le bac de chargement peut en outre être chargé avec des feuilles de papier cartonné, et rechargé lorsqu'il est vide. L'imprimante peut également être munie de systèmes de gestion du papier et/ou d'encre spécifiques à l'impression de carte postale.

L'expression « carte postale » désigne une feuille de papier cartonné sur laquelle une image est imprimée. Le papier cartonné est un papier présentant des propriété mécaniques et physiques spécifiques le distinguant d'autres types de papier, et notamment du papier à photo. En particulier, contrairement au papier à photo, le papier cartonné résiste mal à l'enroulement et/ou au déroulement. La borne peut être adaptée pour un papier cartonné qui présente un grammage supérieur ou égal à 150 g.m⁻¹, 180 g.m⁻¹, 200 g.m⁻¹, ou 220 g.m⁻¹, et/ou inférieur ou égal à 300 g.m⁻¹, ou 500 g.m⁻¹. Le papier cartonné peut être couché.

L'impression de carte postale consiste à imprimer une telle image sur une feuille de papier cartonné vierge. L'impression peut se faire par exemple sur un seul côté de la feuille de papier vierge. L'imprimante peut ainsi être adaptée à une impression uniquement recto. Une telle imprimante est simple à réaliser. Alternativement, l'imprimante peut être adaptée à une impression recto verso. La borne peut ainsi imprimer le recto avec l'image, mais également le verso avec d'autres éléments. Une telle imprimante présente une grande maniabilité pour l'utilisateur.

L'imprimante peut être adaptée au chargement et à l'impression de feuilles de papier présentant un ou plusieurs format(s) particulier(s). Cette adaptation de l'imprimante à un ou plusieurs format(s) particulier(s) peut être restrictive (c'est-à-dire que l'imprimante n'accepte que le ou les format(s) particulier(s)) ou non restrictive (c'est-à-dire que l'imprimante accepte également un ou plusieurs autre(s) format(s)). Le ou les format(s) particulier(s) peuvent comprendre un ou plusieurs format(s) des feuilles rectangulaire(s) (possiblement carré(s)). Les feuilles peuvent ainsi présenter une première dimension, par exemple la largeur, supérieure à 5 cm, 8 cm ou 10 cm, et/ou inférieure à 12 cm, 18 cm, ou 22 cm. Les feuilles peuvent également présenter une deuxième dimension, par exemple la longueur, supérieure à 8 cm, 10 cm ou 12 cm, et/ou inférieure à 18 cm, 22 cm, ou 30 cm. Cela peut par exemple comprendre le format A6 (c'est-à-dire 10,5 cm x 14,8 cm). L'imprimante peut être adaptée à l'un ou plusieurs des types de papier décrits. La carte postale peut ainsi être utilisée par un utilisateur comme un moyen de correspondance écrite qui se présente sous la forme d'un morceau de papier cartonné rectangulaire, envoyé sans enveloppe papier, l'adresse et l'affranchissement y étant portés directement, aux côtés du message.

La borne est par ailleurs adaptée à un chargement simple et pratique de l'image à imprimer par l'utilisateur. En effet, la borne comprend pour cela un système de pilotage de l'imprimante particulier. Un système de pilotage d'imprimante est un système informatique, ou « ordinateur », pouvant être couplé à l'imprimante et pouvant être configuré pour communiquer des informations à l'imprimante, notamment le chargement d'une image et une commande d'impression de l'image. Le système de pilotage comprend pour cela des moyens matériels spécifiques, par exemple un processeur, une mémoire, et/ou des moyens de couplage avec l'imprimante pour la communication des informations à l'imprimante. Le système de pilotage comprend également des moyens logiciels spécifiques pour la réalisation du pilotage, par exemple un programme d'ordinateur spécifique. L'expression « programme d'ordinateur » désigne tout ensemble d'instructions de code de programme pour l'exécution du pilotage, lorsque le programme est exécuté sur le système de pilotage.

L'expression « système » peut désigner un processeur couplé à de la mémoire et contrôlé par du logiciel adéquat pour assurer les fonctionnalités du système. La mémoire peut se présenter sous la forme d'une ou plusieurs unités physiques, et elle comprend de la mémoire volatile et/ou non-volatile, typiquement une mémoire non-volatile qui stocke les programmes, et une mémoire volatile qui stocke les données traitées lors d'utilisations du système. La mémoire et le processeur du système peuvent être des composants physiques partagés avec d'autres systèmes ou alternativement dédiés. Le programme peut être compilé ou précompilé. Le programme peut être un programme déjà installé ou un programme d'installation. Le programme peut être stocké sur un support mémoire, par exemple la mémoire du système de pilotage, ou une mémoire transportable, par exemple une clé de stockage ou un disque dur transportable.

Le système de pilotage de l'imprimante de la borne est en particulier configuré pour le chargement d'une image sous format numérique, c'est-à-dire une représentation visuelle d'une scène quelconque numérisée, par exemple sous un format standard, tel que le formats JPG, BMP, TIFF, GIF, et/ou PNG de manière non limitative. L'image peut être une photographie numérique. L'image est envoyée par un appareil électronique de communication mobile via un canal de communication électromagnétique, puis réceptionnée par le système de pilotage et chargée dans une mémoire adaptée. Le système de pilotage peut en outre commander l'impression de l'image par l'imprimante. Ainsi, la borne peut être utilisée, par exemple en fonctionnement normal et par un utilisateur quelconque, pour imprimer une image provenant de l'extérieur de la borne, c'est-à-dire non préalablement enregistrée dans une mémoire de la borne. L'image est envoyée à la borne par un appareil électronique de communication mobile via un canal de communication électromagnétique. L'expression « appareil électronique de communication mobile » désigne tout appareil électronique et/ou informatique portatif utilisable de manière autonome lors d'un déplacement pour la communication avec d'autres appareils. La borne peut ainsi être configurée pour recevoir l'image depuis un appareil électronique de communication mobile quelconque, par exemple un téléphone portable, une tablette, ou encore un ordinateur portable.

L'envoi de l'image se fait via un canal de communication électromagnétique, et par exemple en particulier sans connexion physique (e.g. au moins pendant l'envoi) entre d'un côté l'appareil électronique de communication mobile sur lequel l'image est initialement stockée, et de l'autre côté le système de pilotage de l'imprimante et/ou la borne. L'envoi peut comprendre par exemple une étape d'établissement/ouverture d'un tel canal entre l'appareil électronique de communication mobile et le système de pilotage, une étape de transfert des données numériques formant l'image depuis l'appareil électronique de communication mobile vers, le système de pilotage, et une étape de fermeture du canal. D'autres étapes peuvent s'intercaler entre ces étapes. L'image est chargée, c'est-à-dire stockée dans une mémoire du système de pilotage et/ou de l'imprimante, par exemple une mémoire vive ou une mémoire non-volatile, par exemple de manière transitoire ou semi-permanente, afin de pouvoir être imprimée, si le système de pilotage commande l'impression de l'image.

Ainsi, l'envoi de l'image d'un utilisateur à la borne pour son impression est simple et sans contact. En outre, la borne n'a pas besoin de fente dédiée au transfert de l'image par insertion d'un outil de stockage de données, et peut donc être dépourvue d'une telle fente. La borne peut permettre le transfert d'images depuis des appareils électriques portables par ondes électromagnétiques à large bande passante, permettant de réduire le temps de transfert. Ce système de transfert est particulièrement adapté aux technologies actuelles des téléphones mobiles (dits « smartphones », de l'anglais).

Le canal de communication électromagnétique peut être un canal WiFi. Ce type de canal est particulièrement efficace pour l'envoi de l'image, c'est-à-dire d'une image numérique dont la taille peut être supérieure à 100, 200, 500 kilooctets ou 1 mégaoctet, parfois de l'ordre de plusieurs mégaoctets voire une dizaine de mégaoctets. La bande passante est en effet élevée. A titre d'exemple comparatif, on peut citer le canal Bluetooth qui se distingue du canal Wifi par des caractéristiques techniques qui impliquent des temps de transfert plus importants (par exemple la bande passante limitée et/ou faible consommation).

Ainsi, le canal de communication électromagnétique peut être réalisé par un point d'accès WiFi configuré pour cela et fourni avec la borne. En particulier, le système de pilotage de l'imprimante peut comprendre lui-même le point d'accès WiFi, qui peut donc être à l'intérieur de la borne. En d'autres termes, le système de pilotage comprend des moyens adaptés pour qu'un appareil électronique de communication mobile puisse lui envoyer l'image à imprimer via un canal Wifi que le système de pilotage fournit à l'appareil. Cela rend la borne autonome une fois installée.

Le système de pilotage de l'imprimante peut par exemple être configuré pour diffuser un service Web, que l'appareil électronique de communication peut réceptionner. Le service Web peut comprendre une fonctionnalité de commande de l'envoi de l'image. Ainsi, dans un périmètre Wifi de la borne, l'utilisateur peut accéder au service Web diffusé (par exemple en continu) par la borne et commander l'envoi d'une image stockée par l'appareil, et par exemple son impression ultérieure. Cela permet à l'utilisateur d'utiliser la borne sans installation préalable, par simple accès au service Web. Le système de pilotage de l'imprimante peut être configuré pour diffuser le service Web via un protocole de portail captif. Cela rend l'utilisation de la borne plus ergonomique, permettant d'afficher automatiquement à l'utilisateur du wifi un site Web spécifique qui gère la connexion. En effet, l'utilisateur est dans ce cas directement dirigé vers le service Web lui permettant d'utiliser la borne.

Le service Web peut également comprendre une fonctionnalité d'envoi à l'appareil électronique de communication d'un code personnel d'utilisateur. La borne peut dans ce cas comprendre un système de saisie du code personnel. Le système de pilotage de l'imprimante peut conditionner la commande de l'impression de l'image à la saisie du code personnel par l'utilisateur, après que le service Web lui a communiqué ce code personnel. Cela augmenter la sécurité lors de l'utilisation de la borne.

Comme indiqué précédemment, l'imprimante et le système de pilotage sont à l'intérieur d'une coque. Le terme « coque » désigné toute enveloppe physique (ou « boîtier », ou encore « carcasse ») définissant une enceinte à l'intérieur de laquelle se trouvent des composants, la coque protégeant les éléments à l'intérieur et/ou les rendant inaccessibles à un utilisateur non habilité. La coque peut par exemple comprendre une porte à serrure ou verrou, ou tout autre moyen de sécurisation physique de l'intérieur. La coque peut comprendre de la tôlerie, par exemple en acier, par exemple inoxydable ou peint. Cela la rend particulièrement résistante. La coque peut alternativement ou de manière additionnelle comprendre du matériau plastique. La coque peut être rigide. La coque peut être étanche, ou imperméable. Cela rend la borne utilisable en extérieur, l'imperméabilité protégeant la borne de la pluie. La borne peut par ailleurs comprendre des éléments de fixation de la coque au sol, la fixation étant par exemple permanente ou au moins semi-permanente. La borne peut également comprendre un système de régulation de température, par exemple un système de chauffage, par exemple une résistance chauffante, à l'intérieur de la coque. Cela permet de préserver la température des composants pour qu'ils fonctionnent correctement, ce qui est particulièrement avantageux si la borne est utilisée en extérieur.

La borne peut comprendre en outre un écran tactile. L'écran peut être protégé de l'extérieur, par exemple de la pluie. L'écran permet à l'utilisateur d'interagir avec la borne autrement que via le service Web. L'écran peut par exemple permettre de sécuriser certaines communication sensibles, par exemple la saisie du code personnel susmentionné. En outre, l'écran tactile permet une interaction ergonomique pour certaines entrée de l'utilisateur, l'écran pouvant présenter une taille pratique, par exemple supérieure à celle d'un écran d'un appareil mobile, par exemple supérieure à 9", 11" ou 13", par exemple de l'ordre de 17". L'écran peut par exemple être adapté pour que l'utilisateur retouche l'image, ou qu'il ait une vue du résultat futur de l'impression avant de confirmer l'impression.

La borne peut comprendre un terminal de paiement. Cela permet à l'utilisateur d'effectuer un paiement immédiat et local, comme avec un distributeur automatique. Le terminal de paiement peut comprendre un clavier numérique. Le code personnel mentionné ci-dessus peut être entré par l'utilisateur avec le clavier numérique du terminal de paiement.

La borne peut comprendre un système d'affranchissement. Le système d'affranchissement peut par exemple être utilisé sur commande. Cela permet d'affranchir directement la carte postale imprimée, qui est donc prête à l'envoi. L'affranchissement peut se faire par impression d'une ou plusieurs marque(s) d'affranchissement sur la carte postale, ou par distribution à l'utilisateur d'un ou plusieurs timbre(s) postal(ux) que l'utilisateur peut librement apposer à la carte postale, une fois celle-ci également distribuée.

Ainsi, la borne constitue dans un exemple une borne à impression de cartes postales, adaptée pour être fixée au sol en extérieur. La coque de la borne de l'exemple peut être étanche, d'une solidité et fiabilité adaptées à son exposition. La borne de l'exemple peut être équipée d'un système de régulation de température d'une résistance chauffante pour maintenir la borne de l'exemple en température permettant son bon fonctionnement. Cela permet d'étendre son terrain d'implantation, qui n'est dans un exemple pas limité aux espaces intérieurs. En outre, la borne de l'exemple peut comprendre un système permettant l'affranchissement des cartes postales, soit par débiteur de timbres associé à la borne, soit par impression de timbres au verso de la carte. La borne peut se présenter sous la forme d'une borne munie d'un écran tactile, d'un débiteur de timbre, d'une sortie impression, d'un TPE ainsi que d'un monnayeur, et d'une sortie ticket. La borne de l'exemple peut être équipée des composants suivants : tôlerie sur pied, résistance chauffante pour maintien de la borne en température, écran, terminal de paiement, monnayeur, et/ou imprimante ticket thermique distincte de l'imprimante à carte postale. La borne de l'exemple peut être équipée d'un terminal paiement et d'un échangeur de pièces. La borne de l'exemple peut être équipée d'un système permettant l'affranchissement des cartes postales soit par débiteur de timbres associé à la borne, soit par impression de timbres au verso de la carte. La borne de l'exemple peut être équipée d'un horodateur, permettant par exemple d'apposer une date et une heure à la carte postale.

Une telle borne permet l'installation sur l'espace public d'un dispositif d'impression de cartes postales à partir des propres images (ex : photos) personnelles d'un utilisateur. La borne de l'exemple peut par exemple permettre d'imprimer ses propres photos sur carte postale en se connectant depuis son smartphone par wifi. La borne de l'exemple peut être prévue pour être implantée sur l'espace public. La borne de l'exemple peut être munie d'un écran et d'un clavier, d'une carte à puce (par exemple pour le wifi), d'une imprimante format carte postale, et d'un terminal paiement carte bancaire. Le principe de fonctionnement peut être simplement le suivant : on se connecte depuis son smartphone grâce au wifi de la borne, on télécharge ses photos sur un site dédié, on valide et paie ses choix depuis la borne qui imprime les cartes postales en retour. La borne peut également prévoir un affranchissement des cartes postales, et la création d'une application permettant de stocker préalablement ses photos, de les retoucher (cadres, tags, et/ou composition), et de géo-localiser les bornes ainsi que les postes et boites postales. Cela offre à l'utilisateur une grande facilité d'usage.

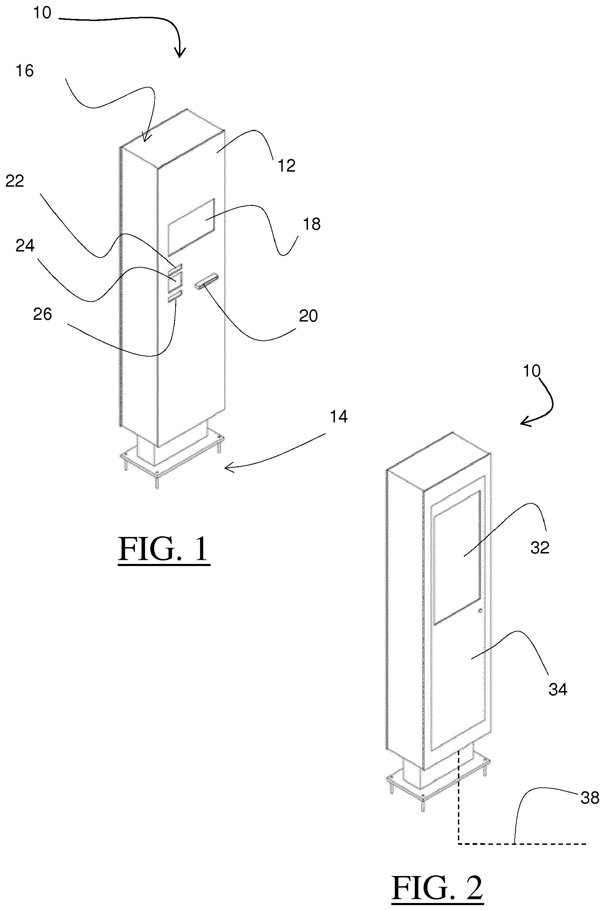

Les FIGs. 1-2 montrent un exemple d'une borne 10, selon une vue en perspective, respectivement de face et de dos, fonctionnant selon les principes évoqués ci-dessus.

La borne 10 comprend une coque 12, par exemple étanche, en acier inoxydable et/ou peint, et des fixations 14 au sol, constituant ainsi une tôlerie sur pied(s). La borne 10 comprend à l'intérieur de la coque 12 une imprimante à carte postale et un système de pilotage de l'imprimante. La borne 10 comprend le point d'accès WIFI 16. Le point d'accès 16 est configuré pour établir le canal WiFi via lequel un appareil peut envoyer une image à imprimer en carte postale. La carte postale est distribuée à l'utilisateur par la fente 20 d'un système de sortie de papier cartonné. La borne 10 comprend l'écran tactile 18. La borne 10 comprend également un terminal de paiement, incluant l'écran 22 du terminal de paiement, le clavier 24 (pour entrer un code de carte de paiement) et le lecteur de cartes 26, pouvant faire également office de sortie de facture papier. D'autres types de terminal de paiement peuvent être implémentés. La borne 10 comprend également un panneau 32, pouvant former un espace d'information, et une porte 34 d'accès à la machinerie à l'intérieur de la borne 10 qui peut être équipée d'une serrure. La borne 10 peut être alimentée en énergie via un raccordement 38 au réseau électrique représenté schématiquement sur la FIG. 2.

Des exemples de configurations indépendantes de la borne 10 sont maintenant discutés. Le terminal de paiement 22-26 peut être adapté pour une prise en charge du paiement sans contact. L'écran 18 peut être 17" extérieur, et/ou transflectif haute luminosité. La borne 10 peut comprendre une imprimante ticket thermique, par exemple 80 mm, distribués via la sortie 26. La borne 10 comprend une imprimante à carte postale non représentée sur les FIGS. 1-2, mais l'imprimante peut aussi être adaptée pour imprimer des photos et/ou la borne 10 peut comprendre une imprimante distincte adaptée à cela. La borne 10 comprend également le système de pilotage de l'imprimante, non représenté. Le système de pilotage. peut comprendre un ordinateur (par exemple sans ventilateur) et une antenne et support carte (par exemple 3G/4G) et/ou une antenne gain élevée. La borne peut également comprendre une personnalisation de la face avant (par exemple un habillage adhésif).

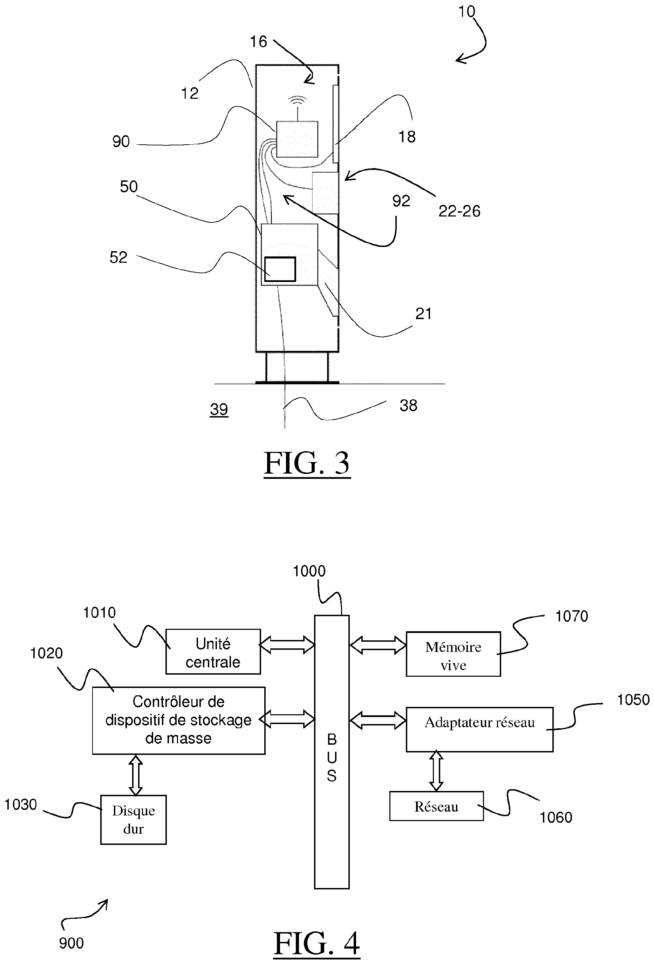

La FIG. 3 montre une vue en coupe de la borne 10 à impression de carte postale des FIGS. 1 et 2.

La borne 10 est fixée au sol 39. La coque 12 protège différents composants à l'intérieur de la coque 12. Ces composants incluent l'imprimante 50, munie du bac 52 de chargement à feuilles de papier cartonné, et le système de pilotage 90 de l'imprimante 50. Le système de pilotage 90 est configuré pour le chargement d'une image envoyée par un appareil électronique de communication mobile via un canal de communication électromagnétique, et pour commander l'impression de l'image par l'imprimante 50. Le système de pilotage 90 pilote/commande l'imprimante via une connectique 92. Dans l'exemple, la connectique 92 permet également au système de pilotage 90 de recevoir des instructions entrées via l'écran tactile 18.

L'antenne 10 peut donc être utilisée par un utilisateur disposant d'un appareil mobile de communication stockant une image. L'utilisateur se présente par exemple devant la borne 10 (côté droit de la FIG. 3). Son appareil se connecte à la borne par le point d'accès WIFI 16. Le point d'accès WIFI 16 est géré par le système de pilotage et inclut une antenne WIFI. L'utilisateur peut commander le chargement de l'image via WIFI, éventuellement moyennant notamment commandes spécifiques entrées via l'écran 18 et/ou le système de paiement 22-26. L'imprimante 50 imprime la carte postale en employant le bac 52. La carte postale est ensuite amenée dans la sortie 21 et distribuée à l'utilisateur.

La FIG. 4 montre un exemple d'un système de pilotage 900 de l'imprimante implémenté comme un système informatique standard. Le système de pilotage 900 de l'exemple comprend une unité centrale (CPU) 1010 reliée à un bus de communication interne 1000, une mémoire vive (RAM) 1070 également reliée au BUS. Un contrôleur de dispositif de stockage de masse 1020 gère des accès à un dispositif de mémoire de masse tel qu'un disque dur 1030. Les dispositifs de mémoire de masse appropriés pour des instructions de programme d'ordinateur et des données tangibles comprennent toutes les formes de mémoire non volatile, y compris, à titre d'exemple, les dispositifs de mémoire à semi-conducteurs tels qu'EPROM, EEPROM et les dispositifs à mémoire flash, les disques magnétiques tels que les disques durs internes et les disques magnéto-optiques amovibles et les disques CD-ROM ou DVD. N'importe lequel des dispositifs ci-dessus peut être complété par ou incorporé dans des ASIC spécialement conçus (circuits intégrés spécifiques aux applications). Un adaptateur de communication 1050 gère les accès à un système de communication 1060 (par exemple à un système de communication radio).

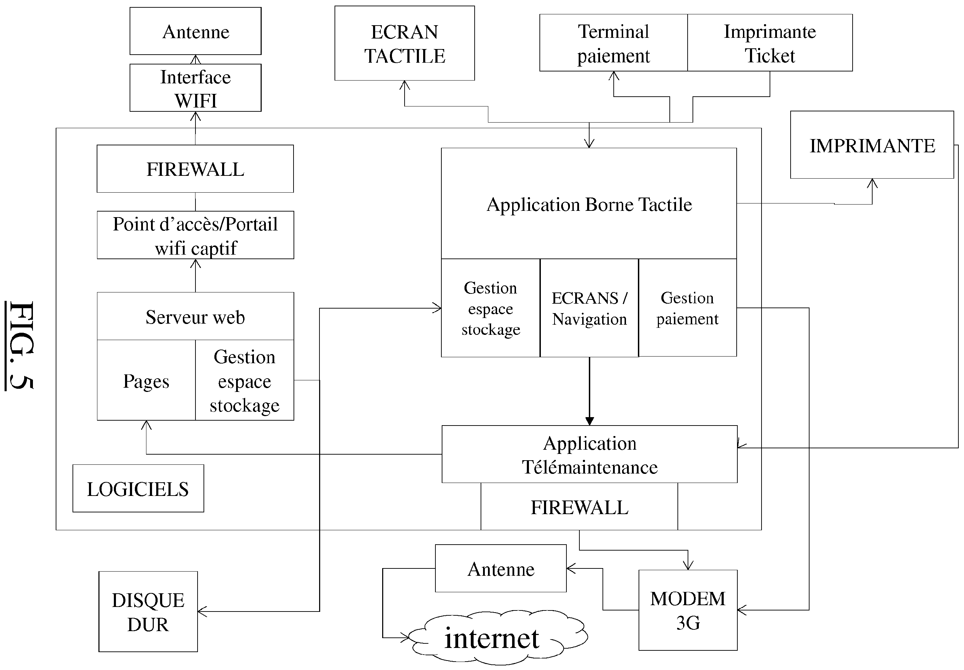

La FIG. 5 montre un exemple d'une architecture de fonctionnement de la borne, qui est maintenant discutée du point de vue réseau et logiciel. Cette architecture peut être implémentée par différents exemples de la borne fournis ci-dessus, et notamment par les exemples de la borne discutés en référence aux FIGs. 1-2.

La borne selon cette architecture permet la fourniture d'un point d'accès WIFI en libre-service. Chaque connexion WIFI à la borne par l'intermédiaire de son point d'accès est identifiée par l'adresse MAC du client. L'adresse MAC est considéré comme un identifiant. Le point d'accès WIFI en lui-même n'est pas protégé ou encrypté de façon à faciliter la connexion (WIFI ouvert sans mot de passe). Le point d'accès WIFI de la borne donne droit à la consultation de ces pages spécifiques lié au service proposé. Cet accès est donc restreint au réseau informatique local de la borne, contenant les services (pages web) servis par la borne. Cette restriction est rendue possible par l'utilisation d'un Firewall isolant l'accès internet de la borne de l'accès WIFI. Dans ce contexte, la borne fournit également tous les services de base à l'utilisation d'un réseau local par les clients, par exemple un service DHCP avec pool d'IP locale, et un service DNS permettant l'accès au serveur locaux. Le point d'accès WIFI étant destiné à la consultation du site web hébergé par la borne, il est doté d'une variation d'un système de « portail captif ». Lors de la connexion au point d'accès WIFI, le browser du client est automatiquement redirigé vers la « page d'accueil ». La page d'accueil permet de présenter le service et d'initier le processus d'utilisation de la borne. La connexion du client identifié par son adresse MAC lui permet de retrouver sa session si la connexion est interrompue. De façon à optimiser le chargement de cette page d'accueil, le protocole de portail captif peut être optimisé pour les principaux OS et versions d'OS.

La borne selon cette architecture implémente un serveur de page web local. La borne contient un serveur WEB de pages spécifiques permettant la présentation du service (page d'accueil), le choix et chargement des photos à imprimer, et l'échange du code d'identification. Le serveur peut fonctionner exclusivement en https de façon à protéger les communications sur le réseau WIFI ouvert (donc non crypté lui-même).

Optionnellement, la borne selon cette architecture peut fournir un accès à des services tiers. En effet, des services tiers partenaires peuvent également être hébergés sur la borne. Cependant l'accès à Internet n'étant pas disponible sur le point d'accès WIFI, il est limité, en taille et en accès. Par exemple, il n'offre pas de service de paiement. Un système de cache local de site web peut être mis en place pour donner accès à certains sites web tiers depuis la borne. Ces copies locales peuvent être mise à jour par télémaintenance.

La borne selon cette architecture permet le chargement de photos. A partir de la page d'accueil, l'utilisateur est dirigé vers une page lui permettant de charger ses photos sur la borne. Pour ce faire, un espace de stockage temporaire dédié lui est alloué, correspondant à son adresse MAC. Il est à noter qu'en écoutant les communications du réseau WIFI et en usurpant l'adresse WIFI MAC d'un utilisateur, on peut accéder à un espace de stockage d'un autre utilisateur. Pour améliorer cela, l'espace de stockage peut être temporaire.

La borne selon cette architecture permet l'impression des photos. L'utilisateur reçoit à partir de son adresse MAC WIFI un code personnel à quatre chiffres (PIN code) quand il consulte le serveur web local. Il rentre ce code sur le clavier de la borne pour accéder à son espace de stockage. A partir de là, il lui suffit de valider les photos, choisir le nombre d'impression et de régler (terminal de paiement) pour déclencher l'impression.

La borne selon cette architecture peut permettre une télémaintenance par internet. De façon isolée de l'accès WIFI, la borne peut être connectée à Internet, par exemple par l'intermédiaire d'un MODEM GSM 3G. Cela permet d'effectuer une télémaintenance. Cela permet également la mise à jour logiciel (bas niveau, applicatif, et page web locales). Cela permet également la remonté de compteurs (nombre d'impression, factures) toutes les 30 minutes. Cela permet également la surveillance de l'état de l'imprimante et des bacs (feuilles, encre) et de l'état général de la machine.

Un exemple d'expérience utilisateur de la borne, par exemple selon l'architecture décrite en référence à la FIG. 5, est maintenant discuté.

Selon cet exemple d'utilisation de la borne, l'utilisateur peut se connecter au wifi ouvert de la borne avec son appareil électronique portable (smartphone, tablette, ou ordinateur portable). Par exemple, l'utilisateur est automatiquement redirigé vers la page internet d'accueil du service. L'utilisateur est identifié par son adresse MAC. Le logiciel de gestion de l'espace de stockage personnel créé un emplacement personnalisé pour l'utilisateur a durée temporaire.

Selon cet exemple d'utilisation de la borne, l'utilisateur peut effectuer le chargement d'images ou de photos. Par exemple, la page internet propose le chargement d'image ou de photo à l'utilisateur. L'utilisateur sélectionne une image ou photo à charger sur la borne. Le serveur web et le système de gestion de l'espace personnel copie l'image ou photo dans le disque dur de l'ordinateur. L'utilisateur choisit par l'intermédiaire de pages *ad hoc* les paramètres d'impression (ex : nombre d'impression). L'utilisateur peut supprimer une image ou photo de son espace.

Selon cet exemple d'utilisation de la borne, l'utilisateur peut être amené à valider et à entrer un code personnel. Par exemple, le système affiche le récapitulatif de la commande avec le prix. Optionnellement, l'utilisateur peut procéder à un paiement en ligne par carte bancaire à partir des pages. L'utilisateur peut valider sa commande. Le système peut générer un code pin personnel temporaire. Le système peut afficher le code personnel.

Selon cet exemple d'utilisation de la borne, l'utilisateur peut ouvrir une session sur la borne. Par exemple, l'utilisateur rentre le code pin sur l'écran tactile ou sur le TPE. Le système peut ouvrir l'espace personnel correspondant.

Selon cet exemple d'utilisation de la borne, l'expérience comprend la confirmation de l'espace personnel et le paiement. Par exemple, le système affiche sur l'écran la commande un aperçu des photos et des prix. L'utilisateur peut accepter le paiement. Si le paiement n'est pas déjà effectué, l'utilisateur peut utiliser le TPE ou le receveur de pièces pour payer. Le logiciel peut valider le paiement, possiblement grâce à la connexion 3G.

Selon cet exemple d'utilisation de la borne, l'expérience comprend l'impression d'une ou plusieurs carte(s) postale(s). Par exemple, la confirmation du paiement déclenche l'impression. Le logiciel peut envoyer les photos présentes sur l'espace personnel de stockage à l'imprimante.

## Revendications

1. Borne (10) à impression de carte postale comprenant :
- une coque (12),
- une imprimante (50) à l'intérieur de la coque, l'imprimante étant munie d'un bac (52) de chargement à feuilles de papier cartonné, et
- un système de pilotage (90, 900) de l'imprimante, le système de pilotage de l'imprimante étant configuré pour le chargement d'une image envoyée par un appareil électronique de communication mobile via un canal de communication électromagnétique, et pour commander l'impression de l'image par l'imprimante.

2. Borne selon la revendication 1, dans laquelle le canal de communication électromagnétique est un canal WiFi.

3. Borne selon la revendication 2, dans laquelle le système de pilotage de l'imprimante comprend un point d'accès WiFi (16) configuré pour établir le canal WiFi.

4. Borne selon la revendication 3, dans laquelle le système de pilotage de l'imprimante est configuré pour diffuser un service Web, le service Web comprenant une fonctionnalité de commande de l'envoi de l'image.

5. Borne selon la revendication 4, dans laquelle le système de pilotage de l'imprimante est configuré pour diffuser le service Web via un protocole de portail captif.

6. Borne selon la revendication 4 ou 5, dans laquelle le service Web comprend une fonctionnalité d'envoi à l'appareil électronique de communication d'un code personnel d'utilisateur, la borne comprenant un système de saisie du code personnel (24; 18), le système de pilotage de l'imprimante conditionnant la commande de l'impression de l'image à la saisie du code personnel.

7. Borne selon l'une quelconque des revendications 1-6, comprenant en outre un écran tactile (18).

8. Borne selon la revendication 7, dans laquelle la commande de l'impression de l'image par l'imprimante comprend une interaction avec l'utilisateur via l'écran tactile.

9. Borne selon l'une quelconque des revendications 1-8, comprenant en outre :
- un terminal de paiement (22-26),
- un système d'affranchissement, et/ou
- système de régulation de température à l'intérieur de la coque.

10. Programme d'ordinateur comprenant des instructions de code de programme pour l'exécution, lorsque ledit programme est exécuté sur le système de pilotage de l'imprimante d'une borne selon l'une quelconque des revendications 1-9, des étapes du procédé consistant à:
• commander le chargement d'une image depuis un appareil électronique de communication mobile via un canal de communication électromagnétique, et
• commander l'impression de l'image par l'imprimante.
